# EUROPEAN PATENT SPECIFICATION

(11) **EP 3 084 021 B1**
(45) Date of publication and mention of the grant of the patent: **19.06.2019**
(21) Application number: 13817683.9
(22) Date of filing: 20.12.2013
(51) Int. Cl.: C22B 3/02, C22B 3/04

(54) **METHOD AND SYSTEM**
VERFAHREN UND SYSTEM
PROCÉDÉ ET SYSTÈME

(43) Date of publication of application: 26.10.2016
(73) Proprietor: Outotec (Finland) Oy, 02230 Espoo (FI)
(72) Inventor: STEGEMANN, Bertold, 65760 Eschborn (DE); ACOSTA DE NOACK, Sonia, 61440 Oberursel (DE); SCHNEIDER, Günter, 64653 Lorsch (DE); SCARSELLA, Alessio, 61348 Bad Homburg (DE)
(74) Representative: Keil & Schaafhausen Patent- und Rechtsanwälte PartGmbB
(86) International application number: PCT/EP2013/077712
(87) International publication number: WO 2015/090450

(56) References cited:
- WO-A1-2006/026819
- US-A- 4 361 541
- US-A1- 2005 077 032
- BEREZOWSKY R M G S ET AL: "THE COMMERCIAL STATUS OF PRESSURE LEACHING TECHNOLOGY", J O M, SPRINGER NEW YORK LLC, UNITED STATES, vol. 43, no. 2, 1 February 1991 (1991-02-01), pages 9-15, XP000249995, ISSN: 1047-4838

## Description

### Background

The invention relates to a method and system for pressurised, high temperature leaching of ore.

In a multitude of ore processing processes, valuable species contained in the ore are leached into a liquid phase of a solvent. Since in most cases the leaching efficiency increases with temperature, the processes are run at elevated temperatures. Therefore, higher pressures are used to avoid boiling of the solvent used.

Document US 2005/077032 A1 describes a system for cooling and recuperative heating of a slurry in a metallurgical process which includes heat exchangers, pumps and autoclaves is described herein. The heat exchangers use a non-scaling common liquid heat transfer medium. Preferably, the heat exchangers are tube-in-tube heat exchangers with 3 to 7 slurry tubes in each heat exchanger. An advantage of this system is that it does not use flash tanks. To minimize abrasive wear on impinged surfaces, the velocity of the slurry is not more than 5 meters per second. The slurry comprises a solids concentration of 25% to 50%. Preferably, the pumps in the system are float-type pumps in which the driven liquid from the discharge pumps is also used as the drive liquid for the feed pumps.

The heating of suspension of the ore and the solvent is usually done by steam which is generated in a stepwise decompression of the hot suspension after the leaching phase, which at the same time cools the suspension down. A problem with this process is that the stepwise heat recovery is laborious and costly.

The final heating of the suspension is in most cases put into practice by direct injecting and condensing steam into the solution. This practice has, however, the problem that the suspension is diluted which has to be offset by an increased and more costly evaporation capacity in downstream process plants.

### Brief description

The invention is defined in the appended claims.

According to an embodiment, molten salt is used as the heat transfer medium for the second heat transfer medium. This provides the advantage that the heating and cooling of the ore suspension takes place rapidly and with minimized heat transfer surfaces since molten salts allow for the operation at high temperatures without doing harm to the heat transfer medium.

According to an embodiment, thermal oil is used as the heat transfer medium for the second heat transfer medium. This provides the advantage of easy handling and maintenance.

According to an embodiment, water is used as the heat transfer medium, preferably for the first heat transfer medium. This may provide the advantage that the heat transfer medium is cheap, and with its high heat capacity allows for minimized recirculation flows.

According to an embodiment, the ore slurry is pre-heated in a pre-heating exchanger, hot first heat transfer medium is received from the cooling step in said pre-heating heat exchanger, and cooled first heat transfer medium is discharged from said pre-heating heat exchanger for feeding it back in the cooling step. This may provide the advantage that the transfer of thermal energy into the ore slurry does not rely on elaborate multiple flash stages and is easy to control.

According to an embodiment, the ore slurry is pre-heated in at least two pre-heating exchangers arranged in series. This provides the advantage that the ore suspension can be pre-heated to high temperatures.

According to an embodiment, the ore slurry is cooled in a cooling heat exchanger, wherein cooled first heat transfer medium is received from the pre-heating step in said cooling heat exchanger, and heated first heat transfer medium is discharged from said cooling heat exchanger for circulating it back in the pre-heating step. This may provide the advantage that the transfer of thermal energy from the ore slurry into first heat transfer medium is easy to control.

According to an embodiment, the ore slurry is cooled in at least two cooling heat exchangers arranged in series. This provides the advantage that the ore suspension can be cooled down from high temperatures in a controlled way.

According to an embodiment, the ore slurry is heated to the working temperature in a final heat exchanger. This may provide the advantage that the working temperature of the ore slurry is easy to control and no dilution of the ore slurry takes place.

According to an embodiment, the ore slurry is heated to the working temperature in at least two final heat exchangers arranged in series. This may provide the advantage that high working temperatures is reached in a controlled way.

According to an embodiment, the process is a process of extraction of valuables such as - but not restricted to - nickel, cobalt or bauxite from their respective ores. This may provide the advantages of reduced investment and maintenance costs.

According to an embodiment the process is "Bayer process" used for the production aluminium hydroxide. This may provide the advantages of reduced investment and maintenance cost, improved ease of operation and increased availability/reliability of the process.

According to an embodiment, the process is Sherritt Gordon process. This may provide similar advantages as with "Bayer process" described above.

According to an embodiment, the reactor means comprises a holding tube or vessel for holding the ore slurry at the desired operation temperature for the holding time necessary for achieving the targeted extraction yield. This may provide the advantage that there is time enough for completing the leaching reactions.

According to an embodiment, the heat exchanger is a pipe heat exchanger. This may provide the advantage that primary and secondary heat transfer circuits may easily be facilitated.

According to an embodiment, the heat exchanger is a plate heat exchanger. This may provide the advantage that a more compact plant design may be feasible.

### Brief description of figures

Some embodiments illustrating the present disclosure are described in more detail in the attached drawings, in which
Figure 1 is a schematic side view of an example method and system in partial cross-section,
Figure 2 is a schematic side view of another method and system in partial cross-section,
Figure 3 is a schematic side view of third method and system in partial cross-section.

In the figures, some embodiments are shown simplified for the sake of clarity. Similar parts are marked with the same reference numbers in the figures.

### Detailed description

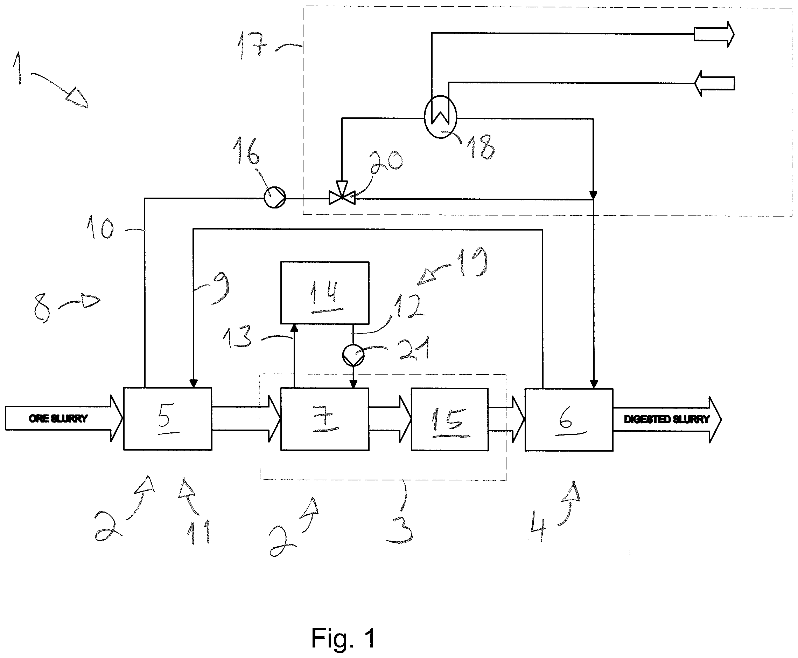

Figure 1 is a schematic side view of an example method and system in partial cross-section.

The main components of the system 1 for pressurised, high temperature leaching of ore may comprise heating means 2, final heating or reactor means 3 and cooling means 4.

Maximum slurry temperatures achieved may be as high as 350°C, second heat transfer temperatures as high as up to 550°C and first heat transfer circuit temperatures as high as up to 300°C depending on allowable system pressure.

The purpose of the heating means 2 is to heat ore slurry comprising ore and solvent. The heating means 2 comprises a pre-heating means 11 comprising heat exchanger 5 for heating the ore slurry by thermal energy of a first heat transfer medium, and a final-heating heat exchanger 7 for heating the ore slurry to desired temperature, i.e. working temperature, by thermal energy of a second heat transfer medium.

The final-heating heat exchanger 7 and said second heat transfer medium are separate from the pre-heating means 11 and the first heat transfer medium.

The final-heating heat exchanger 7 may be arranged upstream of or integrated into the reactor means 3 where reactions of the heated ore slurry are taking place at working temperature and holding time installed. Said reactions leach valuable species from the ore into the heated solvent. Depending on the solvent - ore combination, the known leaching reactions are primarily commencing in this section.

The cooling means 4 cools down the reacted ore slurry to a desired temperature, preferably slightly above or to the boiling point of the slurry at this process point.

The cooling means 4 may comprise a cooling heat exchanger 6 where the reacted and hot ore slurry is cooled by absorbing the thermal energy of said reacted ore slurry to the first heat transfer medium.

The system 1 further comprises a circulation system 8 including a receiving piping 9 and a feedback piping 10 for circulating the first heat transfer medium between the pre-heating heat exchanger 5 and the cooling heat exchanger 6.

The heat exchanger 5, 6, 7 may be e.g. a pipe heat exchanger, a plate heat exchanger or any other heat exchanger capable of separating slurry from the heat transfer circuits and known per se.

For instance in pipe heat exchanger, the ore suspension may run through the tube side and the heat carrier through the shell side.

The first heat transfer medium may comprise, for example, molten salt, thermal oil, water, saturated steam, superheated steam etc.

Also the second heat transfer medium may comprise molten salt, thermal oil, water, superheated steam etc.

The heat transfer medium is preferably liquid that develops a comparatively low vapor pressure at high temperatures. The heat transfer medium is preferably pressurised in order to sustain high thermal energy density therein.

The molten salt may be, for instance, one sold under a trade name Hitec®. The melting point of Hitec® salt is about 150°C and the maximum operation temperature is about 550°C. Hitec® is a eutectic mixture of watersoluble, inorganic salts of potassium nitrate, sodium nitrite and sodium nitrate. Other salts, i.e. pure salt, salt mixtures or salt compositions, may, of course, be used as the heat transfer medium.

Thermal oils can be used up to temperatures of 400°C, for instance Dow Chemical "Dowtherm", and provide for the easier handling. However, thermal oils do not allow for the higher temperatures that can be achieved with molten salts.

The system 1 realizes methods for pressurised, high temperature leaching of ore, which method comprises heating ore slurry comprising ore and solvent in two steps, i.e. in a pre-heating step and in a final-heating step, reacting and holding the heated ore slurry at working temperature for leaching valuable species into the heated solvent, and cooling the hot and leached ore slurry.

First, said ore slurry is pressurized according to the vapor pressure of the liquid phase to a pressure needed to securely avoid boiling of said liquid at the desired operating temperatures by pressurizing means and fed to the system 1. Said pressurizing means are not shown in the Figures.

The term "ore" refers to the solid part of the slurry and the solid matter from which a given valuable is to be extracted and which varies in composition according to application and ore used as a feedstock.

The pressurized ore slurry is heated first in the pre-heating exchanger(s) 5 for heating to a desired pre-heating temperature. Said temperature may be as high as up to 350°C but, of course, it may be lower depending on requirements of the process.

Pre-heated and pressurized ore slurry is then fed in the reactor means 3 and in the final-heating exchanger 7 therein. The final-heating exchanger 7 that brings thermal energy to the process from an external heat source is needed because the extraction processes are mostly endothermic and because elevated temperatures are required to economically perform the extraction reaction. Furthermore the final temperature achieved has to be such as to cover unavoidable heat losses. The final-heating exchanger 7 further heats up the ore slurry to the working temperature needed for leaching the ore.

The reactor means 3 may comprise at least one holding vessel 15 for holding the ore slurry the holding time necessary for achieving the targeted extraction yield of the leaching process. The holding vessel 15 may comprise holding tubes and/or holding tanks.

The leaching reactions occur at temperatures usually between 150°C and 450°C, for example about 400°C. The temperature depends e.g. on the ore that is leached and the prevailing process conditions (and whether catalysts are used or not).

When the required reactions have taken place in the reactor means 3, resulting reaction products are fed to a cooling means 4 where they are cooled down to an economically optimal temperature and optionally depressurized.

The cooling heat exchanger 6 arranged in the cooling means 4 receives the hot ore slurry and cools it down by transferring thermal energy of said ore slurry into the first heat transfer medium. Thus the temperature of the first heat transfer medium is increased in the cooling heat exchanger 6.

The cooling heat exchanger 6 is connected through a circulation system 8 of the first heat transfer medium to the pre-heating heat exchanger 5. The circulation system establishes a closed loop of flow pipings where the first heat transfer medium is continuously circulating through the cooling heat exchanger 6 and the pre-heating heat exchanger 5.

The circulation system 8 shown in Figure 1 comprises a receiving piping 9, a feedback piping 10 the necessary heat exchangers, the heat transfer medium, and one or more circulation pumps 16.

The receiving piping 9 is arranged to receive heated first heat transfer medium form the cooling heat exchanger 6 and discharge it to the pre-heating heat exchanger 5.

The feedback piping 10 receives cooled first heat transfer medium form the pre-heating heat exchanger 5 and discharges it to the cooling heat exchanger 6.

The receiving and feedback pipings 9, 10 may be constructed from any suitable pipes, ducts or conduits known per se.

The circulation pump(s) 16 create(s) pressure-difference needed for circulating the first heat transfer medium through the circulation system 8 and the heat exchangers 5, 6. The circulation pump 16 may be any suitable pump known per se.

The circulation system 8 may comprise an additional start up and controlling means 17.

The start up and controlling means 17 may comprise an auxiliary heater 18 and a tree way valve 20 or equivalent means. Said valve 20 is arranged to allow or prevent the flow of the first heat transfer medium to enter the auxiliary heater 18. The flow to the auxiliary heater 18 is typically allowed in start-up phase of the process. As soon as the temperature of the first heat transfer medium has reached a given temperature, the valve 20 can switched off said flow.

The auxiliary heater 18 may be a heat exchanger as shown in Figure 1, a steam powered heater, a gas heater or an electric heater or any suitable heater known per se.

The pre-heated ore slurry is heated to the final or working temperature in the final heat exchanger 7 that receives hot second heat transfer medium from a heat source 14. The heat source 14 may be a heat exchanger, a gas heater or an electric heater or any suitable heater known per se.

The hot second heat transfer medium gives up heat to the ore slurry running through the final heat exchanger 7, thus raising the temperature of the ore slurry. As a consequence of this the second heat transfer medium cools down and is fed back in the heat source 14.

Thus there is a second circulation system 19 that establishes a closed loop where the second heat transfer medium is continuously circulating through the heat source 14 and the final heat exchanger 7.

The second circulation system 19 shown in Figure 1 comprises a final receiving piping 12, a final feedback piping 13 and a final circulation pump 21.

The receiving piping 9 is arranged to receive heated first heat transfer medium form the cooling heat exchanger 6 and discharge it to the pre-heating heat exchanger 5.

The system 1 and the method may carry out any process generally applicable for the extraction of ores at elevated temperatures and pressures, for example extraction of bauxite, nickel and cobalt from lateritic ores etc.

The method may be a part of e.g. the Bayer process, Sherritt Gordon process etc.

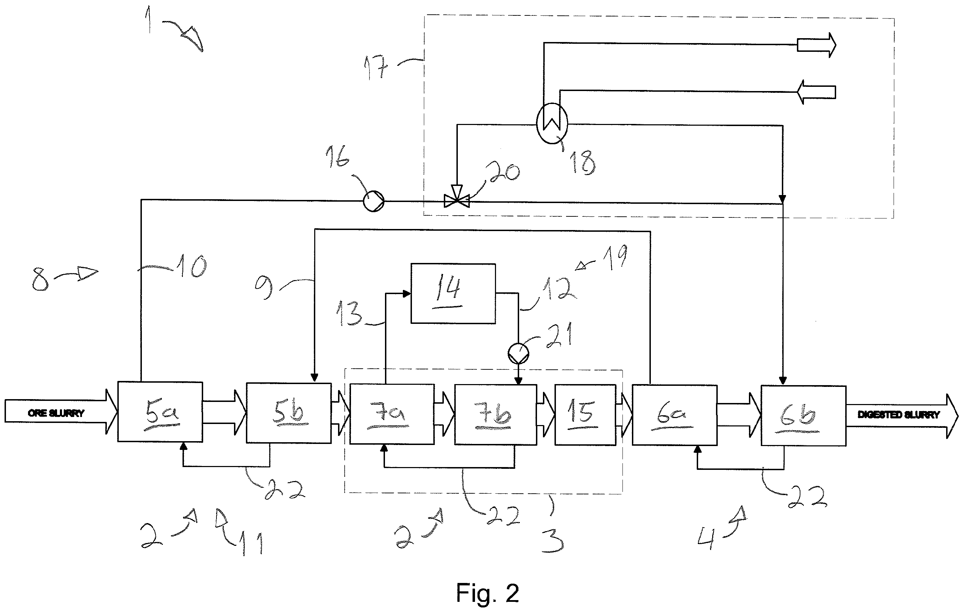

**Figure 2** is a schematic side view of another method and system in partial cross-section. The system 1 and the method are basically similar to those shown in Figure 1 apart from multi-stage heat exchanger arrangements in the circulation system 8 and the second circulation system 19.

The pre-heating means 11 comprises now two pre-heating heat exchangers 5a, 5b connected in series. The ore suspension to be heated enters first in a first pre-heating heat exchanger 5a and from there in a second or last pre-heating heat exchanger 5b. The ore suspension discharged from the last pre-heating heat exchanger 5b is fed into the reactor means 3.

The receiving piping 9 feeds the first heat transfer medium to the last pre-heating heat exchanger 5b. Said last pre-heating heat exchanger 5b receives thus hot first heat transfer medium from the cooling means 4.The first heat transfer medium gives up part of its thermal energy to the ore slurry in the last pre-heating heat exchanger 5b.

The first heat transfer medium is then discharged from the last pre-heating heat exchanger 5b and fed through a connection piping 22 into first pre-heating heat exchanger 5a.

The first heat transfer medium gives up its thermal energy to the ore suspension in the first pre-heating heat exchanger 5a after which the first heat transfer medium is discharged in a feedback piping 10 for discharging cooled first heat transfer medium back in the cooling means 4.

The system 1 and method disclosed in Figure 2 realizes thus a stepwise pre-heating of the ore suspension where the first heat transfer medium flows against the flow of the ore suspension. This is particularly advantageous embodiment of the invention in processes where the ore suspension has to be heated to high temperature, i.e. where the leaching of the valuable species contained in the ore into the liquid phase of the solvent takes place at high temperatures, as is for instant the case of mono- hydrate bauxite extraction, with temperatures up to 300°C.

Also the cooling means 4 may comprise more than one heat exchanger. The embodiment shown in Figure 2 comprises two cooling heat exchangers 6a, 6b that are connected in series.

The receiving piping 9 is arranged to connect the first of said cooling heat exchangers 6a to the pre-heating means 11, more precisely to the last pre-heating heat exchanger 5b for feeding hot first heat transfer medium therein.

The feedback piping 10 is arranged to discharge the first heat transfer medium cooled in the pre-heating means 11 back into last of said cooling heat exchangers 6b.

The system 1 and method disclosed in Figure 2 realizes also a stepwise cooling of the ore suspension. This is particularly advantageous embodiment of the invention to be used in processes where the ore suspension has leached in a high temperature.

The system 1 disclosed in Figure 2 comprises two final heat exchangers 7a, 7b connected in series. A final receiving piping 12 is arranged to connect the last or second final heat exchanger 7b to a heat source 14 for receiving heated second heat transfer medium therefrom.

The hot second heat transfer medium that has given up some of its heat energy to the ore suspension is then discharged from the second final heat exchanger 7b and fed through a connection piping 22 into a first final heat exchanger 7a where it heats up the ore suspension.

A final feedback piping 13 is connected between the first final heat exchanger 7a and the heat source 14 for discharging cooled second heat transfer medium to said heat source 14 for reheating.

It is to be noted, however, that depending on structure of the heat exchanger, the flow of ore suspension may be against or parallel or transversal in relation to the flow of heat transfer medium when considering flows taking place inside said heat exchanger.

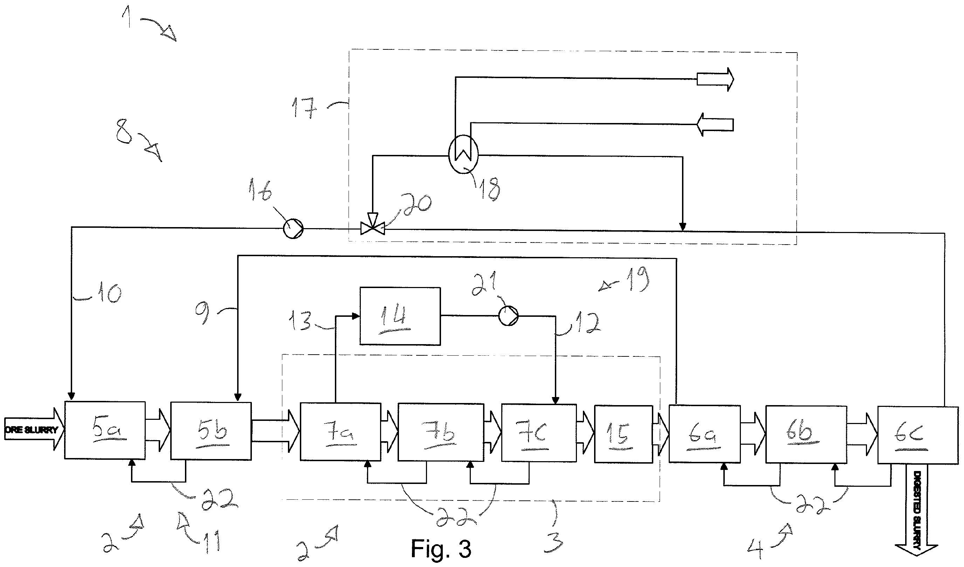

**Figure 3** is a schematic side view of third method and system in partial cross-section. This embodiment has two pre-heating heat exchangers 5a, 5b the function of which is similar to those in Figure 2.

The cooling means 4 comprises three cooling heat exchangers 6a, 6b, 6c connected in series and the function of which is basically similar to those in Figure 2.

Also the reactor means 3 comprises three final heat exchangers 7a, 7b, 7c connected in series.

As it can be concluded from Figures 1 to 3, the system 1 may comprise one or more pre-heating heat exchangers, one or more cooling heat exchangers and one or more final heat exchangers. The number of the heat exchangers is based on requirements of the leaching process, desired leaching capacity etc.

An idea of the invention is that the circulation system comprises two or more sub-circulation systems, each of which comprises at least one pre-heating heat exchanger and at least one cooling heat exchanger.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### Reference symbols

- 1: system
- 2: heating means
- 3: reactor means
- 4: cooling means
- 5, 5a, 5b: pre-heating heat exchanger
- 6, 6a-6c: cooling heat exchanger
- 7, 7a-7c: final-heating heat exchanger
- 8: circulation system
- 9: receiving piping
- 10: feedback piping
- 11: pre-heating means
- 12: final receiving piping
- 13: final feedback piping
- 14: heat source
- 15: holding vessel
- 16: circulation pump
- 17: start-up means
- 18: auxiliary heater
- 19: 2^{nd} circulation system
- 20: valve
- 21: final circulation pump
- 22: connection piping

## Claims

1. A method for pressurised leaching of ore, comprising
a) heating ore slurry comprising ore and solvent,
b) reacting and holding the heated ore slurry at working temperature for leaching valuable species into the heated solvent,
c) cooling the ore slurry, whereby the heating comprises
d) pre-heating the ore slurry in a pre-heating step by thermal energy of a first heat transfer medium, and
e) further heating said ore slurry in a final-heating step to said working temperature by thermal energy of a second heat transfer medium separate from the first heat transfer medium,
f) cooling the reacted ore slurry in a cooling step by absorbing the thermal energy of the reacted ore slurry to the first heat transfer medium, and
g) circulating said first heat transfer medium between the cooling step and the pre-heating step,
**characterized by**
carrying out the final-heating step by a heat exchanger capable of separating slurry from the heat transfer circuits, and
using molten salt or thermal oil as the second heat transfer medium.

2. The method as claimed in claim 1, **characterized by** using molten salt, thermal oil or water as the first heat transfer medium.

3. The method as claimed in any of the preceding claims, **character**-
**ized** by
pre-heating the ore slurry in a pre-heating exchanger,
receiving hot first heat transfer medium from the cooling step in said pre-heating heat exchanger, and
discharging cooled first heat transfer medium from said pre-heating heat exchanger for feeding it back in the cooling step.

4. The method as claimed in claim 3, **characterized by** pre-heating the ore slurry in at least two pre-heating exchangers arranged in series,
receiving hot first heat transfer medium from the cooling step in the last of said pre-heating heat exchangers, and
discharging cooled first heat transfer medium from the first of said pre-heating heat exchangers for feeding it back in the cooling step.

5. The method as claimed in any of the preceding claims, **character-ized** by
cooling the ore slurry in a cooling heat exchanger,
receiving cooled first heat transfer medium from the pre-heating step in said cooling heat exchanger, and
discharging heated first heat transfer medium from said cooling heat exchanger for circulating it back in the pre-heating step.

6. The method as claimed in claim 5, **characterized by**
cooling the ore slurry in at least two cooling heat exchangers arranged in series,
receiving cooled first heat transfer medium from the pre-heating step in the last of said cooling heat exchangers, and
discharging heated first heat transfer medium from the first of the cooling heat exchangers for circulating it back in the pre-heating step.

7. The method as claimed in any of the preceding claims, **character-ized** by
heating the ore slurry to the working temperature in a final heat exchanger,
receiving hot second heat transfer medium from a heat source in said final heat exchanger, and
discharging cooled second heat transfer medium from said final heat exchanger for feeding it back in the heat source.

8. The method as claimed in claim 7, **characterized by**
heating the ore slurry to the working temperature in at least two final heat exchangers arranged in series,
receiving hot second heat transfer medium from a heat source in the last of said final heat exchangers, and
discharging cooled second heat transfer medium from the first of said final heat exchangers for feeding it back in the heat source.

9. The method as claimed in any of the preceding claims, **characterized by** the process being a process of extraction nickel from lateritic ore, or a process of extraction cobalt from lateritic ore, or a leaching process of bauxite to produce alumina, in particular the Bayer process, or the Sherritt Gordon process.

10. A system (1) of pressurised leaching of ore, comprising
h) heating means (2) for heating ore slurry comprising ore and solvent,
i) reactor means (3) for reaction of the heated ore slurry in a working temperature for leaching valuable species into the heated solvent,
j) cooling means (4) for cooling the reacted ore slurry, k) the heating means (2) comprises a pre-heating means (11) comprising heat exchanger (5) for heating the ore slurry by thermal energy of a first heat transfer medium,
I) the cooling means comprises (4) a cooling heat exchanger (6) for cooling the reacted ore slurry by absorbing the thermal energy of the reacted ore slurry to the first heat transfer medium,
m) the heating means (2) further comprises a final-heating heat exchanger (7) for heating the ore slurry to said working temperature by thermal energy of a second heat transfer medium separate from the first heat transfer medium, and
n) a circulation system (8) comprising a receiving piping (9) and a feedback piping (10) for circulating the first heat transfer medium between the pre-heating heat exchanger (5) and the cooling heat exchanger (6),
**characterized in that**
the final-heating heat exchanger (7) is a heat exchanger capable of separating slurry from the heat transfer circuits, and that the second heat transfer medium is molten salt or thermal oil.

11. The system as claimed in claim 10, **characterized in that**
the pre-heating means (11) comprises at least two pre-heating heat exchangers (5a, 5b) connected in series,
the receiving piping (9) being arranged to connect the last of said pre-heating heat exchangers (5a, 5b) to the cooling means (4) for receiving hot first heat transfer medium, and
the feedback piping (10) being arranged to connect the first of said pre-heating heat exchangers (5a, 5b) to the cooling means (4) for discharging cooled first heat transfer medium back in the cooling means (4).

12. The system as claimed in any one of claims 10 to 11, **characterized in that**
the cooling means (4) comprises at least two cooling heat exchangers (6a, 6b, 6c) connected in series,
the receiving piping (9) being arranged to connect the first of said cooling heat exchangers (6a, 6b, 6c) to the pre-heating means (11) for feeding hot first heat transfer medium therein, and
the feedback piping (10) being arranged to connect the last of said cooling heat exchangers (6a, 6b, 6c) to the pre-heating means (11) for discharging cooled first heat transfer medium back in last of said cooling heat exchangers (6a, 6b, 6c).

13. The system as claimed in any one of claims 10 to 12,
**characterized in that**
the reactor means (3) comprises at least two final heat exchangers (7a, 7b, 7c) connected in series,
a final receiving piping (12) that is arranged to connect the last of said final heat exchangers (7a, 7b, 7c) to a heat source (14) for receiving hot second heat transfer medium from said heat source (14), and
a final feedback piping (13) that is arranged to connect the first of said final heat exchangers (7a, 7b, 7c) to the heat source (14) for discharging cooled second heat transfer medium to said heat source (14).

14. The system as claimed in any one of claims 10 to 13, **characterized in that** the reactor means (3) comprises a holding vessel (15) for holding the ore slurry heated in the final heat exchanger (7a, 7b, 7c) the holding time necessary for achieving the targeted extraction yield.

15. The system as claimed in any one of claims 10 to 14, **characterized in that** the heat exchanger (5, 5a, 5b, 6, 6a-6c, 7, 7a-7c) is a pipe heat exchanger or a plate heat exchanger.

## Patentansprüche

1. Verfahren zum Laugen von Erzen unter Druck, umfassend
a) Erwärmen einer Erzaufschlämmung umfassend Erz und Lösungsmittel,
b) Reagieren und Halten der erwärmten Erzaufschlämmung bei Betriebstemperatur zum Auslaugen wertvoller Spezies in das erwärmte Lösungsmittel,
c) Kühlen der Erzaufschlämmung, wobei das Erwärmen umfasst
d) Vorwärmen der Erzaufschlämmung in einem Vorwärmungsschritt durch thermische Energie eines ersten Wärmeträgermediums und
e) weiteres Erwärmen der Erzaufschlämmung in einem finalen Wärmeschritt auf die Betriebstemperatur durch thermische Energie eines zweiten, vom ersten Wärmeträgermedium getrennten Wärmeträgermediums,
f) Kühlen der reagierten Erzaufschlämmung in einem Kühlschritt durch Absorbieren der thermischen Energie der reagierten Erzaufschlämmung auf das erste Wärmeträgermedium, und
g) Zirkulieren des ersten Wärmeträgermediums zwischen dem Kühlungsschritt und dem Vorwärmungsschritt,
**gekennzeichnet durch**
eine Durchführung des finalen Wärmeschritts **durch** einen Wärmetauscher, der in der Lage ist, die Aufschlämmung von den Wärmeübertragungskreisen zu trennen, und
**durch** Verwendung von geschmolzenem Salz oder Thermoöl als zweites Wärmeträgermedium.

2. Verfahren nach Anspruch 1, **gekennzeichnet durch** die Verwendung einer Salzschmelze, Thermoöl oder Wasser als erstes Wärmeübertragungsmedium.

3. Verfahren, wie es in einem der vorhergehenden Ansprüche beansprucht wird, **gekennzeichnet durch**
Vorwärmen der Erzschlämme in einem Vorwärmetauscher,
Erhalten eines heißen ersten Wärmeträgermediums aus dem Kühlungsschritt in dem Vorwärmwärmetauscher, und
Abführen eines gekühlten ersten Wärmeträgermediums aus dem Vorwärmwärmetauscher zum Rückführen in den Kühlungsschritt.

4. Verfahren nach Anspruch 3, **gekennzeichnet durch**
das Vorwärmen der Erzaufschlämmung in mindestens zwei in Reihe geschalteten Vorwärmetauschern,
Erhalten des heißen ersten Wärmeträgermediums aus dem Kühlschritt im letzten der Vorwärm-Wärmetauscher und
Abführen des gekühlten ersten Wärmeträgermediums aus dem ersten der Vorwärmungs-Wärmetauscher zum Rückführen in den Kühlungsschritt.

5. Verfahren, wie es in einem der vorhergehenden Ansprüche beansprucht wird, **gekennzeichnet durch**
das Kühlen der Erzaufschlämmung in einem Wärmetauscher zur Kühlung,
Erhalten von gekühltem erstem Wärmeträgermedium aus dem Vorwärmungsschritt in dem Kühlwärmetauscher, und
Abführen des erwärmten ersten Wärmeträgermediums aus dem Kühlwärmetauscher zum Zurückführen desselben in den Vorwärmungsschritt.

6. Verfahren nach Anspruch 5, **gekennzeichnet durch**
das Kühlen der Erzaufschlämmung in mindestens zwei in Reihe geschalteten Kühlwärmetauschern,
Erhalten von gekühltem erstem Wärmeträgermedium aus dem Vorwärmungsschritt im letzten der Kühlwärmetauscher, und
Abführen des erwärmten ersten Wärmeträgers aus dem ersten der Kühlwärmetauscher, um ihn in den Vorwärmeschritt zurückzuführen.

7. Verfahren, wie es in einem der vorhergehenden Ansprüche beansprucht wird, **gekennzeichnet durch**
Erwärmen der Erzaufschlämmung auf die Betriebstemperatur in einem finalen Wärmetauscher,
Erhalten eines heißen zweiten Wärmeträgermediums von einer Wärmequelle in dem finalen Wärmetauscher, und
Abführen eines gekühlten zweiten Wärmeträgermediums aus dem finalen Wärmetauscher zum Rückführen in die Wärmequelle.

8. Verfahren nach Anspruch 7, **gekennzeichnet durch** das Erwärmen der Erzaufschlämmung auf die Betriebstemperatur in mindestens zwei in Reihe geschalteten finalen Wärmetauschern,
Erhalten eines heißen zweiten Wärmeträgermediums von einer Wärmequelle in dem letzten der finalen Wärmetauscher, und
Abführen eines gekühlten zweiten Wärmeträgermediums aus dem ersten der finalen Wärmetauscher zum Zurückführen in die Wärmequelle.

9. Verfahren, wie es in einem der vorhergehenden Ansprüche beansprucht wird, **dadurch gekennzeichnet, dass** das Verfahren ein Verfahren zur Extraktion von Nickel aus lateritischem Erz oder ein Verfahren zur Extraktion von Kobalt aus lateritischem Erz oder ein Auswaschverfahren von Bauxit zur Herstellung von Aluminiumoxid, insbesondere Verfahren das Bayer-Verfahren oder das Sherritt Gordon-Verfahren ist.

10. System (1) zum Laugen von Erz unter Druck, umfassend
h) Heizmittel (2) zum Erwärmen von Erzaufschlämmung, umfassend Erz und Lösemittel,
i) Reaktorvorrichtungem (3) zur Reaktion der erwärmten Erzaufschlämmung bei einer Arbeitstemperatur zum Auslaugen wertvoller Spezies in das erwärmte Lösungsmittel,
j) Kühlmittel (4) zum Kühlen der reagierten Erzschlämme,
k) die Heizmittel (2) umfassen ein Vorwärmmittel (11) mit einem Wärmetauscher (5) zum Erwärmen der Erzaufschlämmung durch Wärmeenergie eines ersten Wärmeträgermediums,
l) das Kühlmittel (4) umfasst einen Kühlwärmetauscher (6) zum Kühlen der reagierten Erzaufschlämmung durch Absorbieren der Wärmeenergie der reagierten Erzaufschlämmung auf das erste Wärmeträgermedium,
m) die Heizmittel (2) umfassen ferner einen finalen Wärmewärmetauscher (7) zum Erwärmen der Erzaufschlämmung auf diese Betriebstemperatur durch Wärmeenergie eines zweiten Wärmeträgermediums, das vom ersten Wärmeträgermedium getrennt ist, und
n) ein Zirkulationssystem (8) mit einer Aufnahmeleitung (9) und einer Rückführleitung (10) zum Zirkulieren des ersten Wärmeträgermediums zwischen dem Vorwärm-Wärmetauscher (5) und dem Kühl-Wärmetauscher (6),
**dadurch gekennzeichnet, dass**
der finale Wärmewärmetauscher (7) ein Wärmetauscher ist, der in der Lage ist, die Aufschlämmung von den Wärmeträgerkreisläufen zu trennen, und dass das zweite Wärmeträgermedium geschmolzenes Salz oder Thermoöl ist.

11. System nach Anspruch 10, **dadurch gekennzeichnet, dass** das Vorwärmmittel (11) mindestens zwei in Reihe geschaltete Vorwärm-Wärmetauscher (5a, 5b) umfasst,
die Aufnahmeleitung (9) so angeordnet ist, dass sie den letzten der Vorwärm-Wärmetauscher (5a, 5b) mit den Kühlmitteln (4) zur Aufnahme des heißen ersten Wärmeträgers verbindet, und
wobei die Rückführungsleitung (10) angeordnet ist, dass sie den ersten der Vorwärm-Wärmetauscher (5a, 5b) mit den Kühlmitteln (4) verbindet, um gekühltes erstes Wärmeträgermedium in den Kühlmitteln (4) zurückzuleiten.

12. System nach einem der Ansprüche 10 oder 11, **dadurch gekennzeichnet, dass** die Kühlmittel (4) mindestens zwei in Reihe geschaltete Kühlwärmetauscher (6a, 6b, 6c) umfassen,
dass die Aufnahmeleitung (9) so angeordnet ist, dass sie den ersten der Kühlwärmetauscher (6a, 6b, 6c) mit den Vorwärmmitteln (11) verbindet, um das heiße erste Wärmeträgermediums einzuführen, und
dass die Rückkopplungsleitung (10) angeordnet ist, dass sie den letzten der Kühlwärmetauscher (6a, 6b, 6c) mit den Vorwärmmitteln (11) verbindet, um gekühltes erstes Wärmeträgermedium wieder in den letzten der Kühlwärmetauscher (6a, 6b, 6c) zurückzuführen.

13. System nach einem der Ansprüche 10 bis 12, **dadurch gekennzeichnet, dass**
die Reaktormittel (3) mindestens zwei in Reihe geschaltete finale Wärmetauscher (7a, 7b, 7c) umfassen,
eine finale Aufnahmeleitung (12), die so angeordnet ist, dass sie den letzten der letzten Wärmetauscher (7a, 7b, 7c) mit einer Wärmequelle (14) zum Empfangen eines heißen zweiten Wärmeträgermediums von der Wärmequelle (14) verbindet, und
eine finale Rückführungsleitung (13), die so angeordnet ist, dass sie den ersten der Endwärmetauscher (7a, 7b, 7c) mit der Wärmequelle (14) verbindet, um gekühltes zweites Wärmeträgermedium an die Wärmequelle (14) abzugeben.

14. System nach einem der Ansprüche 16 bis 19, **dadurch gekennzeichnet, dass** die Reaktormittel (3) ein Haltegefäß (15) zum Halten der im letzten Wärmetauscher (7a, 7b, 7c) erwärmten Erzaufschlämmung umfassen, wobei die Haltezeit zum Erreichen der angestrebten Extraktionsleistung erforderlich ist.

15. System nach einem der Ansprüche 10 bis 14, **dadurch gekennzeichnet, dass** der Wärmetauscher (5, 5a, 5b, 6, 6a-6c, 7, 7a-7c) ein Rohrwärmetauscher oder ein Plattenwärmetauscher ist.

## Revendications

1. Procédé de production d'oxyde de bore par sulfatation d'un minerai et/ou concentré exempt de sulfure comprenant
(o) l'obtention d'un minerai et/ou concentré exempt de sulfure comprenant un ou des minéraux de borate exempts de sulfure ;
(a) la mise en contact du minerai et/ou concentré exempt de sulfure avec du SO₃ gazeux destiné à la sulfatation du ou des minéraux de borate exempts de sulfure formant ainsi un ou des sulfates de métal et de l'oxyde de bore.

2. Procédé selon la revendication 1, dans lequel le minerai et/ou concentré exempt de sulfure est choisi dans le groupe constitué de minerais exempts de sulfure, de concentrés exempts de sulfure, d'oxydes exempts de sulfure, d'hydroxydes exempts de sulfure, de silicates exempts de sulfure et de tout mélange de ceux-ci, comprenant des minéraux de borate.

3. Procédé selon la revendication 1 ou la revendication 2, dans lequel le minerai et/ou concentré exempt de sulfure est choisi dans le groupe constitué de minerais et/ou concentrés comprenant des minéraux solides exempts de sulfure contenant au moins un minéral de borate tel que la colémanite, l'ulexite, la kernite ou le borax.

4. Procédé selon l'une quelconque des revendications 1 à 3, dans lequel le minéral de borate exempt de sulfure est mis en contact avec du SO₃ dans un réacteur à lit fluidisé (FB), dans un réacteur à lit fluidisé circulant (CFB) ou dans un réacteur à lit fluidisé annulaire (AFB).

5. Procédé selon l'une quelconque des revendications 1 à 4, dans lequel le SO₃ utilisé dans l'étape (a) est produit in situ à partir de soufre.

6. Procédé selon l'une quelconque des revendications 1 à 4, dans lequel le SO₃ utilisé dans l'étape (a) est produit in situ à partir de dioxyde de soufre (SO₂).

7. Procédé selon l'une quelconque des revendications 1 à 4, dans lequel le SO₃ utilisé dans l'étape (a) est produit en combinant du soufre avec de l'oxygène pour former du dioxyde de soufre et convertissant en outre de manière catalytique le dioxyde de soufre en trioxyde de soufre dans lequel le trioxyde de soufre (SO₃) est produit en unités séparées à l'avant du réacteur de sulfatation.

8. Procédé selon la revendication 5, dans lequel la température de l'étape (a) est comprise entre 700 et 1200 °C, de préférence comprise entre 800 et 1000 °C.

9. Procédé selon la revendication 6, dans lequel la température de l'étape (a) est comprise entre 400 et 800 °C, de préférence comprise entre 500 et 700 °C.

10. Procédé selon la revendication 7, dans lequel la température de l'étape (a) est comprise entre 200 et 700 °C, de préférence comprise entre 300 et 630 °C.

11. Procédé selon l'une quelconque des revendications 1 à 10, dans lequel l'étape (a) est effectuée sous pression à une pression atmosphérique comprise entre 1 et 3 bar, de préférence comprise entre 1,2 et 1,8 bar.

12. Procédé selon l'une quelconque des revendications 1 à 11, dans lequel le procédé comprend en outre
(b) la séparation du SO₃ gazeux non réagi à partir du ou des sulfates de métal et de l'oxyde de bore formés.

13. Procédé selon l'une quelconque des revendications 1 à 12, dans lequel le procédé comprend en outre
(c) la lixiviation du ou des sulfates de métal et de l'oxyde de bore formés dans une liqueur de lixiviation aqueuse permettant ainsi l'extraction de l'oxyde de bore dans la liqueur de lixiviation aqueuse ; et
(d) la réalisation d'une séparation solide-liquide permettant la séparation du ou des sulfates de métal restant dans un état solide à partir de l'oxyde de bore dissous.

14. Procédé selon l'une quelconque des revendications 1 à 12, dans lequel le procédé comprend en outre
(c) la lixiviation du ou des sulfates de métal et de l'oxyde de bore formés dans une liqueur de lixiviation aqueuse permettant ainsi l'extraction du ou des sulfates de métal dans la liqueur de lixiviation aqueuse ; et
(d) la réalisation d'une séparation solide-liquide permettant la séparation de l'oxyde de bore restant dans un état solide à partir du ou des sulfates de métal dissous.

15. Procédé selon la revendication 13 ou la revendication 14, dans lequel la liqueur de lixiviation aqueuse est un raffinat, de l'acide épuisé ou de l'eau, de préférence de l'eau.
